# EUROPEAN PATENT SPECIFICATION

(11) **EP 1 222 063 B1**
(45) Date of publication and mention of the grant of the patent: **22.02.2006**
(21) Application number: 99950071.3
(22) Date of filing: 01.10.1999
(51) Int. Cl.: B29C 33/48, B29C 33/22, B29L 30/00

(54) **SEGMENTED TIRE MOLD**
SEGMENTIERTES REIFENFORMWERKZEUG
MOULE A PNEUMATIQUES SEGMENTE

(43) Date of publication of application: 17.07.2002
(73) Proprietor: THE GOODYEAR TIRE & RUBBER COMPANY, Akron, Ohio 44316-0001 (US)
(72) Inventor: LONEY, Gregory, Lee, Cuyahoga Falls, OH 44223 (US); ROBEK, David, Chester, Cuyahoga Falls, OH 44223 (US)
(74) Representative: Kutsch, Bernd
(86) International application number: PCT/US1999/022799
(87) International publication number: WO 2001/024987

(56) References cited:
- CA-A- 935 609
- DE-A- 2 201 012
- FR-A- 1 590 815
- GB-A- 1 409 008
- US-A- 3 990 823
- US-A- 4 828 471

## Description

### Technical Field

This invention relates to segmented tire molds and especially to molds having center segments which are movable radially in response to opening and closing of the mold.

### Background of the Invention

Full segmented molds such as the mold shown and described in US-A-5 585 064 provide for expanding and contracting segments, however, the segments are mounted on the top mold and must be lifted to retract the segments. In addition to the added power required to lift the segments, the wear on the parts is also a disadvantage of this type of mold.

Other segmented molds, such as the mold shown in GB-A-1 176 162 provide hinged segments with springs for retracting the hinge pins of the segment. The tilt type segmented molds of this type do not provide for loading an uncured tire without engaging the bridge work on the segments.

This is especially objectional for molds with curved segmental boundary designs where the mold segments must be retracted in a direction perpendicular to the vertical axis of the segments.

FR-A-1 590 815 describes a segmented tire mold having an upper mold half, a lower mold half and radially movable circumferentially spaced sliding segments wherein each of said sliding segments is mounted on said lower mold half for radial movement, a link is provided between said upper mold half and each of said sliding segments for moving said segments radially of said mold between an open retracted position and a closed molding position, and said link is a disengageable sliding connection.

### Summary of the Invention

The present invention is directed to a segmented mold having radially movable center segments which are mounted on the lower mold half. Each center segment has a slotted connection with a sloped surface of the upper mold half for retracting and then returning the segment to the registered position for molding a tire. The slot in the center segment is open at the top to permit opening of the mold without lifting of the segment. A spring holds the center segment in a radially outward position against a stop in the lower mold half which positions the slot for engagement with the upper mold half upon closing of the mold.

In accordance with one aspect of the invention there is provided a segmented tire mold as defined in claim 1.

In accordance with another aspect of the invention there is provided a method of vulcanizing a tire in a segmented tire mold as defined in claim 3.
Fig. 1 is a plan view of the lower mold half and the center segments embodying the invention.
Fig. 2 is a section of the mold embodying the invention taken along line 2-2 in Fig. 1 with parts being broken away to show the plunger and coil springs of the mold in the closed position.
Fig. 3 is a section like Fig. 2 showing the center segment in a partially retracted position.
Fig. 4 is a enlarged fragmentary sectional view of one of the centering pin connections between the lower mold half and the upper mold half taken along the plane of line 4-4 in Fig. 2.
Fig. 5 is an enlarged fragmentary sectional view of the lower mold half taken along the line 5-5 in Fig. 1 showing the stop means and spring pin for a center segment in the fully retracted position.
Fig. 6 is an enlarged fragmentary sectional view of the sliding connection between the upper mold half and one of the center segments taken along line 6-6 in Fig. 2.

### Detailed Description of the Invention

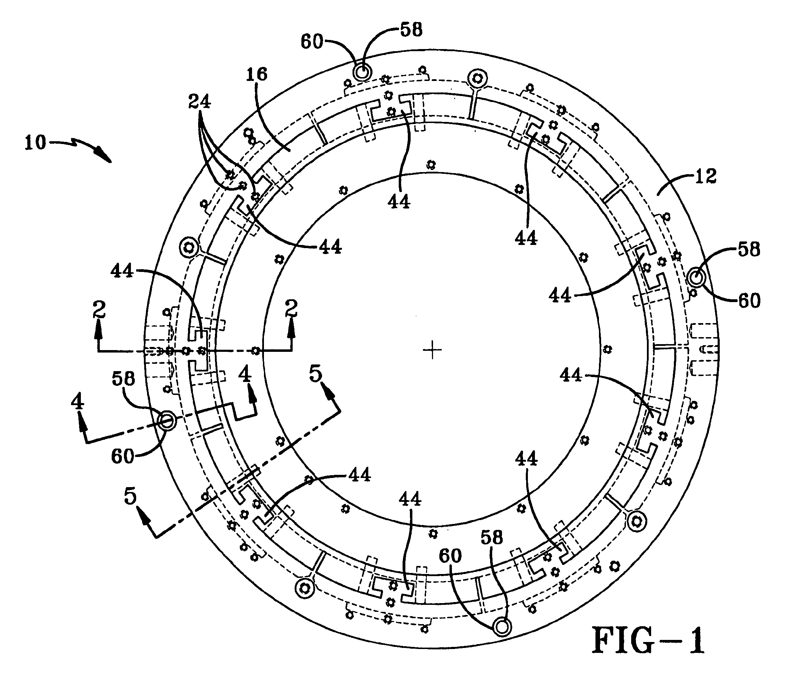

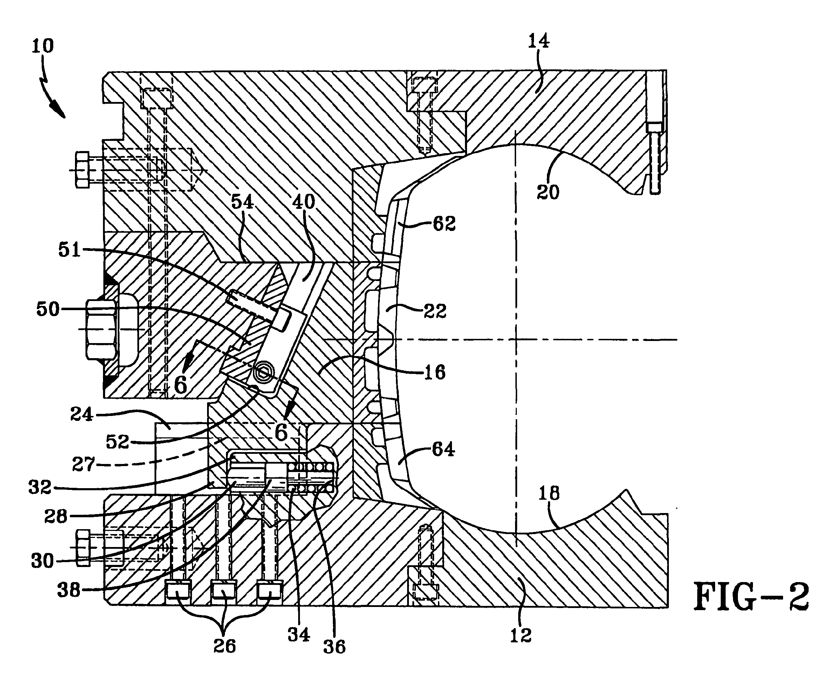

Referring to Figs. 1 and 2, a segmental tire mold 10 is shown having a lower mold half 12, an upper mold half 14 and radially movable center segments 16. The lower mold half 12 and the upper mold half 14 have sidewall forming surfaces 18 and 20 respectively. The center segment 16 has tread forming surfaces 22, which are movable radially for disengaging the mold 10 from the tire after vulcanization.

Each of the center segments 16 is slidably mounted on a T-bar 24, fastened to the lower mold half 12 by bolts 26 or other suitable means. Each T-bar 24 extends radially of the mol d 10 and slides in a slot 27 extending radially of the mold.

Each of the center segments 16 also have recesses 36 with end flanges 28 for plung ers 30 mounted in sleeves 32 mounted on the lower mold half 12 and urged radially outward by coil springs 34 located between the recessed surface 36 in the lower mold half 12 and a flange 38 on the plunger 30. The coil springs 34 hold the center segments 16 in the fully retracted position after mold half 12 is pulled away from the center segments 16.

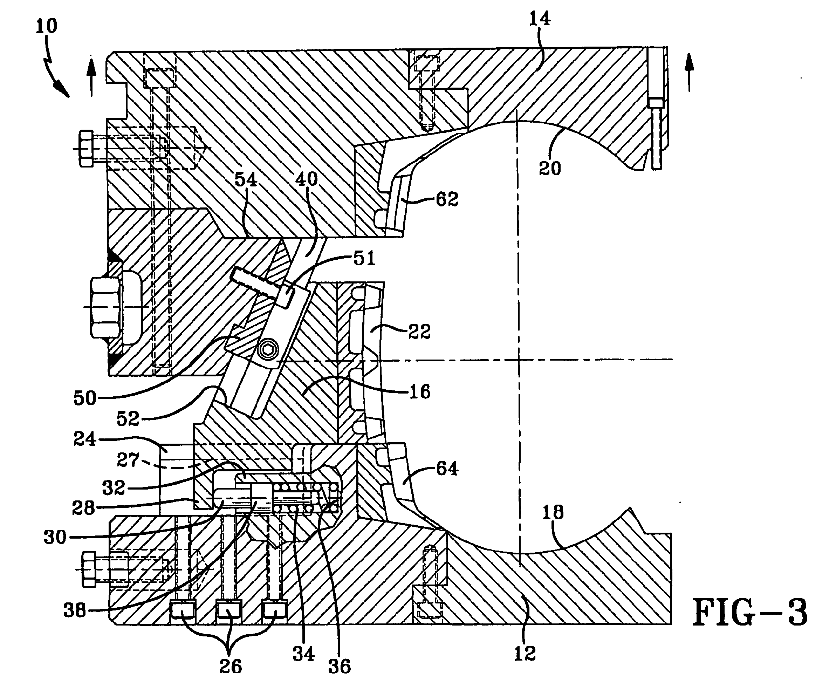

Referring to Fig. 6, a slot 40 is provided in a sloped surface 42 of the center segment 16. and has grooves 44 for receiving rollers 46 mounted on a shaft 48, supported by a bar member 50 which is bolted to the upper mold half 14 by a bolt 51. The slot 40 extends from a base surface 52 to a top edge 54 of the center segment 16. With this construction, lifting of the upper mold half 14 from the position shown in Fig. 2 to the position shown in Fig. 3 provides for travel of the rollers 46 upward through the grooves 44 pulling the center segments 16 radially outward to the position shown in Fig. 3.

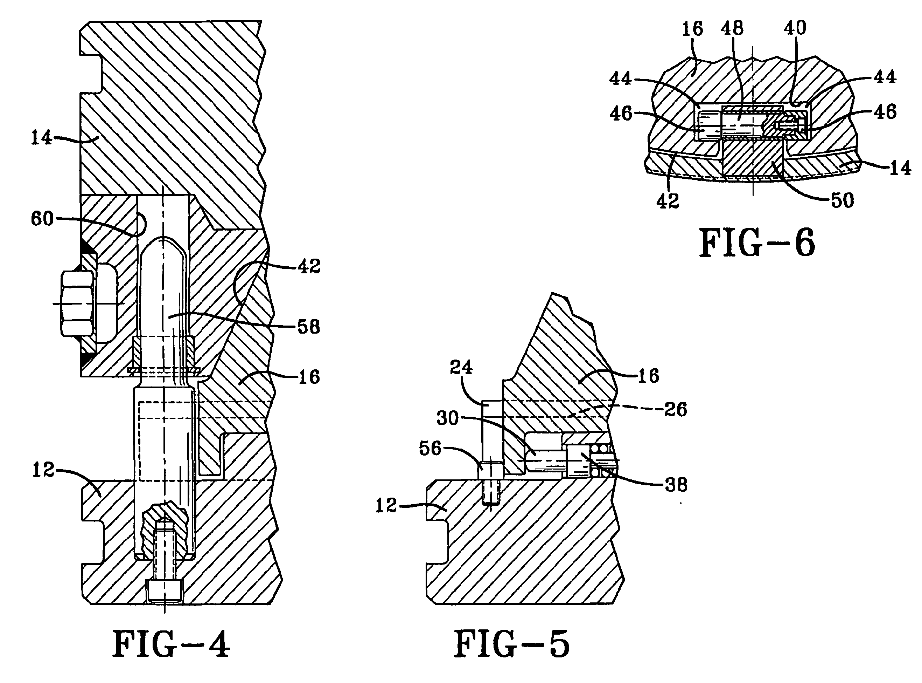

Referring to Fig. 5, stop means, such as bolts 56 are located on the lower mold half 12 at spaced apart positions for limiting the radially outward movement of the center segments 16 beyond the partially open position shown in Fig. 3 to a position where the upper mold half 14 is lifted away from the lower mold half 12 and center segment 16 removing the rollers 46 from the grooves 44. The bolts 56 hold the center segments 16 in the position shown in Fig. 5 by springs 36 so that when the upper mold half 14 is lowered onto the center segment 16, the rollers 46 will be in alignment with and enter the grooves 40 for closing the mold 10.

Referring to Fig. 4, centering pins 58 are mounted in the lower mold half 12 at circumferentially spaced positions for registering in holes 60 in the upper mold half 14 when the upper mold is lowered into position over the center segment 16 and lower mold half 12.

The upper mold half 14 has shoulder forming surfaces 62 adjacent the sidewall forming surfaces 20 and the lower mold half 12 has shoulder forming surfaces 64 adjacent the sidewall forming surfaces 18. Positioned between the shoulder forming surfaces 62 and 64 are the tread forming surfaces 22 on the center segments 16.

In addition to the lower mold half 12, upper mold half 14 and center segments 16, the segmental tire mold 10 also includes means for heating the molds and lifting and lowering the upper mold half 14. These services are well known in the art and are included in this disclosure, although not shown in the drawings or described herein.

In operation the segmental tire mold 10 is opened by lifting the upper mold half 14 away from the center segments 16 and lower mold half 12 causing the center segments 16 to retract to a partially open position shown in Fig. 3. The springs 36 move the segments 16 to the fully open position shown in Fig. 5. A green unvulcanized tire is then lowered into the lower mold half 12 and the upper mold half 14 lowered so that the centering pins 58 shown in Fig. 4 are registered in the centering pin holes 60. The grooves 44 in the center segments are then in position for receiving the rollers 46 of the segment bars 50 in the slots 40 of the center segments 16. Further lowering of the upper mold half 14 from the position shown in Fig. 3 to the position shown in Fig. 2 causes the tread forming surfaces 22 of the center segments 16 to move radially inward into the position shown in Fig. 2. During the closing of the mold 10, the springs 34 are compressed by movement of the flange 28 radially inward against the plungers 30. The segmental tire mold 10 is then in position for molding the tire upon the application of heat for a predetermined period of time.

After the tire is vulcanized, the mold 10 is opened by raising the upper mold half 14. This results in radially outward movement of the center segments 16 due to the action of each T-bar 24 in each slot 27 of each center segment. As the upper mold half 14 is lifted, the rollers 46 attached to the upper mold half engage the surfaces of the slot 40 in the center segments 16 urging them radially outward out of engagement with the cured tire tread. The upper mold half 14 may then be lifted away from the center segment 16 and lower mold half 12 for removal of the tire.

## Claims

1. A segmented tire mold (10) having an upper mold half (14), a lower mold half (12) and radially movable circumferentially spaced sliding center segments (16), each of said sliding center segments (16) being mounted on said lower mold half (12) for radial movement, **characterized by**:
a. a disengageable sliding connection between said upper mold half (14) and each of said sliding center segments (16) for moving said center segments (16) radially of said mold (10) between an open retracted position and a closed molding position, and
b. each said disengageable sliding connection comprising a bar (50) mounted on said upper mold half (14) and having rollers (46) engageable with grooves (44) in said sloped surface (42) of each of said center segments (16) for positively moving each of said center segments (16) radially outward upon opening of said mold (10).

2. A segmented tire mold (10) in accordance with claim 1 further **characterized by** said lower mold half (12) having circumferentially spaced centering pins (58) extending upwardly for register in corresponding spaced-apart holes (60) in said upper mold half (14).

3. A method of vulcanizing a tire in a segmented tire mold (10) having an upper mold half (14), a lower mold half (12) and radially movable circumferentially spaced center segments (16) in sliding engagement with said lower mold half (12) and slidably engageable with said upper mold half (14) upon closing of said mold (10), comprising the steps of :
a. providing a disengageable sliding connection between said upper mold half (14) and each of said sliding center segments (16) for moving said center segments (16) radially of said mold (10) between an open retracted position and a closed molding position, each said disengageable connection comprising a bar (50) mounted on said upper mold half (14) and having rollers (46) engageable with grooves (44) in said sloped surface (42) of each of said center segments (16) for positively moving each of said center segments (16) radially outward upon opening of said mold (10),
b. opening said mold (10) by lifting said upper mold half (14) away from and out of sliding engagement with said center segments (16),
c. simultaneously moving said center segments (16) radially outward by said sliding engagement with said upper mold half (14),
d. limiting said movement of said center segments (16) radially outward by stop means (56) on said lower mold half (12),
e. placing an unvulcanized tire on said lower mold half (12),
f. lowering said upper mold half (14) in sliding engagement with said center segments (16) and simultaneously moving said center segments radially inwards into engagement with said tire upon closing of said mold (10),
g. applying heat to said tire mold (10) to vulcanize said tire,
h. lifting said upper mold half (14) simultaneously, and positively sliding said center segments (16) radially outward on said lower mold half (12), and
i. removing said tire from said tire mold (10).

4. The method of claim 3 further **characterized by** retaining said center segments (16) in a radially outward position by resilient means (34) mounted on said lower mold half (12).

## Patentansprüche

1. Segmentierte Reifenheizform (10) mit einer oberen Heizformhälfte (14), einer unteren Heizformhälfte (12) und radial bewegbaren, um den Umfang beabstandeten, gleitenden Mittelsegmenten (16), wobei jedes der gleitenden Mittelsegmente (16) an der unteren Heizformhälfte (12) für eine radiale Bewegung befestigt ist,
**gekennzeichnet durch**
a. eine ausrückbare Gleitverbindung zwischen der oberen Heizformhälfte (14) und jedem der gleitenden Mittelsegmente (16) zum Bewegen der Mittelsegmente (16) radial der Heizform (10) zwischen einer offenen zurückgezogenen Position und einer geschlossenen formenden Position, und
b. wobei jede ausrückbare Gleitverbindung einen Stab (50) umfasst, der an der oberen Heizformhälfte (14) befestigt ist, und Rollen (46) aufweist, die mit Nuten (44) in der schrägen Fläche (42) eines jeden der Mittelsegmente (16) zum formschlüssigen Bewegen jedes der Mittelsegmente (16) radial nach außen bei Öffnen der Heizform (10) in Eingriff gebracht werden können.

2. Segmentierte Reifenheizform (10) nach Anspruch 1, ferner
**dadurch gekennzeichnet, dass**
die untere Heizformhälfte (12) um den Umfang beabstandete Zentrierstifte (58) aufweist, die sich nach oben erstrecken, um in entsprechende voneinander beabstandeten Löcher (60) in der oberen Heizformhälfte (14) eintreten.

3. Verfahren zum Vulkanisieren eines Reifens in einer segmentierten Reifenheizform (10) mit einer oberen Heizformhälfte (14), einer unteren Heizformhälfte (12) und radial bewegbaren um den Umfang beabstandeten Mittelsegmenten (16) in gleitendem Eingriff mit der unteren Heizformhälfte (12), und die bei Schließen der Heizform (10) gleitend mit der oberen Heizformhälfte (14) in Eingriff gebracht werden können, umfassend die Schritte:
a. Bereitstellen einer ausrückbaren Gleitverbindung zwischen der oberen Heizformhälfte (14) und jedem der gleitenden Mittelsegmente (16) zum Bewegen der Mittelsegmente (16) radial der Form (10) zwischen einer offenen zurückgezogenen Position und einer geschlossenen formenden Position, wobei jede ausrückbare Verbindung einen Stab (50) umfasst, der an der oberen Heizformhälfte (14) befestigt ist, und Rollen (46) aufweist, die mit Nuten (44) in der schrägen Fläche (42) eines jeden der Mittelsegmente (16) zum formschlüssigen Bewegen jedes der Mittelsegmente (16) radial nach außen bei Öffnen der Heizform (10) in Eingriff gebracht werden können,
b. Öffnen der Heizform (10) durch Anheben der oberen Heizformhälfte (14) weg von und aus einem gleitenden Eingriff mit den Mittelsegmenten (16),
c. gleichzeitiges Bewegen der Mittelsegmente (16) radial nach außen durch den gleitenden Eingriff mit der oberen Heizformhälfte (14),
d. Begrenzen der Bewegung der Mittelsegmente (16) radial nach außen durch ein Anschlagmittel (56) an der unteren Heizformhälfte (12),
e. Anordnen eines nicht vulkanisierten Reifens auf der unteren Heizformhälfte (12),
f. Absenken der oberen Heizformhälfte (14) in gleitenden Eingriff mit den Mittelsegmenten (16) und gleichzeitiges Bewegen der Mittelsegmente radial nach innen in Eingriff mit dem Reifen bei Schließen der Heizform (10),
g. Anwenden von Hitze auf die Reifenheizform (10), um den Reifen zu vulkanisieren,
h. gleichzeitiges Abheben der oberen Heizformhälfte (14) und formschlüssiges Verschieben der Mittelsegmente (16) radial nach außen an der unteren Heizformhälfte (12), und
i. Entfernen des Reifens aus der Reifenheizform (10).

4. Verfahren nach Anspruch 3, ferner **gekennzeichnet durch** den Schritt: Zurückhalten der Mittelsegmente (16) in einer radial äußeren Position **durch** ein elastisches Mittel (34), das an der unteren Heizformhälfte (12) befestigt ist.

## Revendications

1. Moule à segments pour bandage pneumatique (10) possédant une moitié de moule supérieure (14), une moitié de moule inférieure (12) et des segments centraux coulissants (16) espacés en direction circonférentielle et mobiles en direction radiale, chacun desdits segments centraux coulissants (16) étant monté sur ladite moitié de moule inférieure (12) à des fins de mouvement radial, **caractérisé par** :
a. une connexion amovible par coulissement entre ladite moitié de moule supérieure (14) et chacun desdits segments centraux coulissants (16) pour déplacer lesdits segments centraux (16) en direction radiale par rapport audit moule (10) entre une position rétractée ouverte et une position de moulage fermée, et
b. chacune desdites connexions amovibles par coulissement comprenant une barre (50) montée sur ladite moitié de moule supérieure (14) et possédant des galets (46) aptes à entrer en contact avec des rainures (44) pratiquées dans ladite surface inclinée (42) de chacun desdits segments centraux (16) dans le but de déplacer mécaniquement chacun desdits segments centraux (16) en direction radiale vers l'extérieur après l'ouverture dudit moule (10).

2. Moule à segments pour bandage pneumatique (10) selon la revendication 1, **caractérisé en outre par le fait que** ladite moitié de moule inférieure (12) possède des broches de centrage (58) espacées en direction circonférentielle s'étendant vers le haut pour venir se disposer en registre dans des trous correspondants (60) espacés les uns des autres, pratiqués dans ladite moitié de moule supérieure (14).

3. Procédé de vulcanisation d'un bandage pneumatique dans un moule à segments pour bandage pneumatique (10) possédant une moitié de moule supérieure (14), une moitié de moule inférieure (12) et des segments centraux coulissants (16) espacés en direction circonférentielle et mobiles en direction radiale, entrant en contact par coulissement avec ladite moitié de moule inférieure (12) et aptes à entrer en contact par coulissement avec ladite moitié de moule supérieure (14) lors de la fermeture dudit moule (10), comprenant les étapes consistant à :
a. procurer une connexion amovible par coulissement entre ladite moitié de moule supérieure (14) et chacun desdits segments centraux coulissants (16) pour déplacer lesdits segments centraux (16) en direction radiale par rapport audit moule (10) entre une position rétractée ouverte et une position de moulage fermée, chacune desdites connexions amovibles par coulissement comprenant une barre (50) montée sur ladite moitié de moule supérieure (14) et possédant des galets (46) aptes à entrer en contact avec des rainures (44) pratiquées dans ladite surface inclinée (42) de chacun desdits segments centraux (16) dans le but de déplacer mécaniquement chacun desdits segments centraux (16) en direction radiale vers l'extérieur après l'ouverture dudit moule (10),
b. ouvrir ledit moule (10) en soulevant ladite moitié de moule supérieure (14) à l'écart desdits segments centraux (16) et en supprimant la mise en contact par coulissement avec lesdits segments,
c. déplacer de manière simultanée lesdits segments centraux (16) de l'extérieur en direction radiale via la mise en contact par coulissement avec ladite moitié de moule supérieure (14),
d. limiter ledit mouvement desdits segments centraux (16) en direction radiale vers l'extérieur par des moyens d'arrêt (56) sur ladite moitié de moule inférieure (12),
e. placer un bandage pneumatique non vulcanisé sur ladite moitié de moule inférieure (12),
f. abaisser ladite moitié de moule supérieure (14) en contact par coulissement avec lesdits segments centraux (16) et déplacer de manière simultanée lesdits segments centraux vers l'intérieur en direction radiale en contact avec ledit bandage pneumatique lors de la fermeture dudit moule (10),
g. appliquer de la chaleur sur ledit moule de bandage pneumatique (10) dans le but de vulcaniser ledit bandage pneumatique,
h. soulever ladite moitié de moule supérieure (14) de manière simultanée et faire coulisser mécaniquement lesdits segments centraux (16) vers l'extérieur en direction radiale sur ladite moitié de moule inférieure (12), et
i. retirer ledit bandage pneumatique dudit moule (10) pour bandage pneumatique.

4. Procédé selon la revendication 3, **caractérisé en outre par** le fait de retenir lesdits segments centraux (16) dans une position dans laquelle ils s'étendent en direction radiale, via des moyens résilients (34) montés sur ladite moitié de moule inférieure (12).
